# DEMANDE DE BREVET EUROPEEN

(11) **EP 3 366 941 A1**
(43) Date de publication de la demande: **29.08.2018**
(21) Numéro de dépôt: 18158270.1
(22) Date de dépôt: 23.02.2018
(51) Int. Cl.: F16D 21/06, F16D 25/0638

(54) **MECANISME D'EMBRAYAGE HUMIDE DONT LA LUBRIFICATION EST AMELIOREE**

(30) Priorité: 28.02.2017 FR 1751606
(71) Demandeur: Valeo Embrayages, 80009 Amiens cedex 2 (FR)
(72) Inventeur: CAUMARTIN, Laurent, 80009 AMIENS (FR); ARHAB, Rabah, 80009 AMIENS (FR); RIBOT, Herve, 80009 AMIENS (FR); VUAROQUEAUX, Guillaume, 80009 AMIENS (FR); DELPLACE, David, 80009 AMIENS (FR)
(74) Mandataire: Vincent, Catherine Marie Marguerite

(57) **Abrégé**

L'invention concerne notamment un mécanisme d'embrayage (10) dont le système d'actionnement (300) comprend une chambre de commande (750A, 750B) agencée pour recevoir un fluide pressurisé, un piston (105) mobile axialement dans la chambre de commande (750A, 750B) afin d'embrayer ou de débrayer l'embrayage (100) correspondant, une chambre d'équilibrage (700) située à l'opposé de la chambre de commande (750A, 750B) par rapport au piston (105), et un dispositif de rappel élastique (800) logé dans la chambre d'équilibrage et agencé pour exercer un effort axial contre ledit piston (105). Selon l'invention, la chambre d'équilibrage (700) d'un des systèmes d'actionnement (300) loge un réducteur de diamètre (900) dont une portée cylindrique (930) permet de délimiter un diamètre extérieur de ladite chambre d'équilibrage, les dimensions radiales de la portée cylindrique (930) étant telles que le diamètre intérieur de ladite portée cylindrique (930) est égal à plus ou moins 2% du diamètre extérieur de la chambre de commande (750A, 750B) de l'un des systèmes d'actionnements (300) du mécanisme d'embrayage (10).

L'invention concerne aussi un système de transmission (1) comprenant un tel mécanisme à double embrayages (10).

## Description

### Domaine technique

La présente invention concerne un mécanisme d'embrayage du type humide et tel qu'utilisé dans le domaine de l'automobile et dont la lubrification est optimisée. L'invention concerne aussi un système de transmission intégrant un tel mécanisme d'embrayage, ainsi qu'un dispositif de rappel élastique permettant d'améliorer le contrôle en fluide hydraulique d'une chambre d'équilibrage d'un mécanisme d'embrayage et dans laquelle le dispositif de rappel élastique est destiné à être montée afin de générer un effort à l'encontre d'un organe permettant d'embrayer ou de débrayer un embrayage du mécanisme d'embrayage.

### État de la technique antérieure

On connait des mécanismes d'embrayage comprenant un embrayage en rotation autour d'un axe de rotation et un générateur d'effort agencé pour embrayer ou débrayer l'embrayage par l'intermédiaire d'une pièce mobile, dite piston, permettant de transmettre vers ledit embrayage l'effort généré au niveau du générateur de force.

De manière connue, un système d'actionnement peut être formé par un générateur d'effort hydraulique comprenant (i) une chambre de commande agencée pour recevoir un fluide pressurisé, (ii) un piston mobile axialement dans la chambre de commande et s'étendant radialement à l'extérieur de la chambre de commande afin d'embrayer ou de débrayer l'embrayage, (iii) une chambre d'équilibrage située à l'opposé de la chambre de commande par rapport au piston, la chambre d'équilibrage comprenant un dispositif de rappel élastique permettant de générer un effort, dit de rappel, à l'encontre du piston.

La chambre de commande est alimentée en un fluide hydraulique pressurisé afin de permettre le déplacement du piston entre une première position correspondant à une configuration embrayée de l'embrayage et une deuxième position correspondant à une configuration débrayée de l'embrayage. Pour ce faire, le fluide hydraulique pressurisé est acheminé vers la chambre de commande par l'intermédiaire de conduits fluidiques dits haute pression.

A contrario, la chambre d'équilibrage est alimentée en un fluide hydraulique dit de lubrification permettant de lubrifier les autres composants du mécanisme d'embrayage et accessoirement la chambre d'équilibrage. Pour ce faire, le fluide hydraulique de lubrification est acheminé notamment vers la chambre d'équilibrage par l'intermédiaire de conduits fluidiques dits basse pression.

De manière connue, la pression du fluide hydraulique de lubrification nécessaire à la lubrification du mécanisme d'embrayage est inférieure à celle du fluide hydraulique pressurisé nécessaire pour la génération de l'effort permettant de configurer l'embrayage dans l'une ou l'autre des configurations énumérées précédemment.

Afin d'assurer un bon fonctionnement du système d'actionnement, il est nécessaire de contrôler le niveau de fluide hydraulique de lubrification présent dans la chambre d'équilibrage, conserver si possible un volume constant dudit fluide hydraulique de lubrification dans ladite chambre d'équilibrage.

On connait le document FR3024511A1 qui divulgue un mécanisme à double embrayages humide dans lequel la chambre de commande du système de commande est formée radialement vers l'extérieur par une portée d'extension axiale du piston, et la chambre d'équilibrage est délimitée radialement vers l'extérieur par une portée d'extension axiale d'un couvercle d'équilibrage. L'imbrication axiale du piston dans la chambre d'équilibrage implique que le diamètre extérieur de la chambre d'équilibrage soit supérieur au diamètre extérieur de la chambre de commande. Consécutivement, sous l'effet de la rotation du mécanisme à double embrayages, le fluide hydraulique de lubrification présent dans la chambre d'équilibrage subit une force centrifuge supérieure à celle affectant le fluide hydraulique pressurisé présent dans la chambre de commande.

Cette pression différentielle affectant le fluide hydraulique de lubrification d'une part et le fluide hydraulique pressurisé d'autre part impose de ménager au niveau du couvercle d'équilibrage une fuite du liquide hydraulique de lubrification afin de compenser la variation différentielle de pression entre les deux chambres du système d'actionnement.

Un inconvénient associé à cette configuration est lié à cette fuite de fluide hydraulique de lubrification qui, s'échappant par la fuite ménagée dans le couvercle d'équilibrage, ne permet pas de lubrifier correctement le mécanisme à double embrayages divulgué dans FR3024511A1 : le liquide hydraulique de lubrification migre vers l'embrayage extérieur par un volume compris entre le porte-disques d'entrée de l'embrayage intérieur et le piston de l'embrayage extérieur plutôt que par un conduit ménagé plus spécifiquement à cet effet et situé à l'aplomb des deux embrayages du mécanisme à double embrayages.

La présente invention a pour objet de répondre au moins en grande partie aux problèmes précédents et de conduire en outre à d'autres avantages en proposant un nouveau mécanisme d'embrayage pour résoudre au moins un de ces problèmes.

Un autre but de la présente invention est de proposer un nouvel dispositif de rappel élastique permettant de mieux contrôler l'équilibrage en pression de la chambre d'équilibrage vis-à-vis de la chambre de commande d'un mécanisme d'embrayage lorsque ledit dispositif de rappel élastique est monté sur ledit mécanisme d'embrayage.

### Exposé de l'invention

Selon un premier aspect de l'invention, on atteint au moins l'un des objectifs précités avec un mécanisme d'embrayage humide destiné à être installé entre un moteur et une transmission de véhicule automobile, lequel mécanisme d'embrayage comprend :
- un embrayage en rotation autour d'un axe de rotation ;
- un système d'actionnement agencé pour embrayer ou débrayer l'embrayage, ledit système d'actionnement comprenant :
   ∘ une chambre de commande agencée pour recevoir un fluide pressurisé ;
   ∘ un piston mobile axialement qui est piloté au moyen de la chambre de commande à laquelle est associée une chambre d'équilibrage, ledit piston comprenant :
      ▪ une portée d'extension radiale qui s'étend radialement entre la chambre de commande et la chambre d'équilibrage ;
   ∘ une portée d'extension axiale qui délimite un diamètre extérieur de la chambre de commande,
   ∘ un dispositif de rappel élastique logé dans la chambre d'équilibrage et s'étendant entre le piston et une face latérale de la chambre d'équilibrage ;
   ∘ un réducteur de diamètre logé dans la chambre d'équilibrage et dont une portée cylindrique d'extension axiale délimite un diamètre extérieur de la chambre d'équilibrage.

Dans un mécanisme d'embrayage conforme au premier aspect de l'invention, un ratio entre le diamètre extérieur de la chambre d'équilibrage formé par le réducteur de diamètre et le diamètre extérieur de la chambre de commande est supérieur à 98% et inférieur à 102%.

Le réducteur de diamètre prend ainsi la forme d'un organe cylindrique et annulaire configuré pour être logé dans la chambre d'équilibrage du mécanisme d'embrayage conforme au premier aspect de l'invention et permettant de délimiter radialement vers l'extérieur le volume intérieur de la chambre d'équilibrage. En d'autres termes, le réducteur de diamètre est agencé pour réajuster le diamètre extérieur de la chambre d'équilibrage afin de le rendre sensiblement égal, aux tolérances de fabrication et/ou de montage près, au diamètre de la face intérieure de la portée d'extension axiale du piston qui délimite radialement vers l'extérieur la chambre de commande. De préférence, on entend par « sensiblement égal », une égalité des diamètres extérieurs à plus ou moins 2%.

Cette configuration avantageuse permet de faire correspondre les diamètres extérieurs des chambres d'équilibrage et de pression du mécanisme d'embrayage conforme au premier aspect de l'invention. Consécutivement, les effets de la force centrifuge sur le fluide contenu dans lesdites chambres et liés à la rotation du mécanisme d'embrayage durant son fonctionnement sont identiques ou quasiment identiques. Ainsi, l'équilibrage en pression de la chambre d'équilibrage est mieux maîtrisé vis-à-vis de la pression hydraulique régnant dans la chambre de commande. Dès lors, il n'est plus nécessaire de ménager une fuite de fluide hydraulique dans la chambre d'équilibrage.

Dans la suite de la description et dans les revendications, on utilisera à titre non limitatif et afin d'en faciliter la compréhension, les termes :
- « avant » ou « arrière » selon la direction par rapport à une orientation axiale déterminée par l'axe O principal de rotation du système de transmission, « l'arrière » désignant la partie située à droite des figures, du côté de la transmission, et « l'avant » désignant la partie gauche des figures, du côté du moteur ; et
- « intérieur / interne » ou « extérieur / externe » par rapport à l'axe O et suivant une orientation radiale, orthogonale à ladite orientation axiale, « l'intérieur » désignant une partie proximale de l'axe O et « l'extérieur » désignant une partie distale de l'axe O.

Le mécanisme d'embrayage conforme au premier aspect de l'invention peut comprendre avantageusement au moins un des perfectionnements ci-dessous, les caractéristiques techniques formant ces perfectionnements pouvant être prises seules ou en combinaison :
- la chambre d'équilibrage est située à l'opposé de la chambre de commande par rapport au piston ;
- le réducteur de diamètre est inséré dans le volume interne de la chambre d'équilibrage ;
- la portée cylindrique d'extension axiale du réducteur de diamètre forme un chemisage intérieur d'au moins une partie radiale supérieure de la chambre d'équilibrage. Ainsi, la portée cylindrique d'extension axiale recouvre au moins en partie, de préférence sans jeu radial, la partie radiale supérieure de la chambre d'équilibrage. Cette configuration avantageuse permet notamment de réaliser un centrage du réducteur de diamètre à l'intérieur de la chambre d'équilibrage ;
- un diamètre d'une face extérieure de la portée cylindrique du réducteur de diamètre est égal à un diamètre extérieur de la chambre d'équilibrage. Par diamètre extérieur de la chambre d'équilibrage, on entend le diamètre d'une face intérieure de la partie radiale supérieure de ladite chambre d'équilibrage. Les effets différentiels de la centrifugation des fluides dans les chambres de pression et d'équilibrage sont ainsi annulés ;
- le réducteur de diamètre comprend des moyens de centrage par rapport à la chambre d'équilibrage, situés sur une face extérieure de la portée cylindrique, afin d'assurer le centrage dudit réducteur de diamètre avec la chambre d'équilibrage. Les moyens de centrage permettent ainsi de centrer le réducteur de diamètre sur la face intérieure de la partie radiale supérieure de la chambre d'équilibrage tout en garantissant d'une part de ne pas déformer la face intérieure de la portée cylindrique du réducteur de diamètre, et d'autre part de ne pas modifier la position radiale prédéterminée de ladite face intérieure de la portée cylindrique ;
- les moyens de centrage du réducteur de diamètre sont déformables. Cette configuration avantageuse permet de pouvoir faire correspondre un diamètre extérieur du réducteur de diamètre avec le diamètre de la partie radiale supérieure de la chambre d'équilibrage ;
- une face extérieure des moyens de centrage a un diamètre supérieur ou égal au diamètre extérieur de la chambre d'équilibrage afin par exemple de permettre une légère déformation radiale desdits moyens de centrage lorsque le réducteur de diamètre est monté dans la chambre d'équilibrage. Par diamètre extérieur de la chambre d'équilibrage, on entend le diamètre d'une face intérieure de la partie radiale supérieure de ladite chambre d'équilibrage ;
- les moyens de centrage prennent la forme d'une pluralité de portées d'extension axiales s'étendant en saillie et radialement vers l'extérieur à partir de la face extérieure de la portée cylindrique ;
- les portées d'extension axiales formant les moyens de centrage sont angulairement régulièrement réparties autour de l'axe de rotation afin de permettre un appui homogène sur la face intérieure de la partie radiale supérieure de la chambre d'équilibrage ;
- les moyens de centrage sont agencés pour pouvoir se déformer radialement afin de faire correspondre un diamètre extérieur du réducteur de diamètre avec le diamètre de la partie radiale supérieure de la chambre d'équilibrage ;
- le réducteur de diamètre est en matière plastique, préférentiellement obtenu par moulage. En particulier, le réducteur de diamètre peut réaliser un surmoulage du dispositif de rappel élastique du mécanisme d'embrayage, notamment au niveau de son extrémité intérieure, afin de former un module indépendant pouvant être facilement inséré dans la chambre d'équilibrage en limitant les opérations d'assemblage sur le mécanisme d'embrayage ;
- le réducteur de diamètre comprend une portée annulaire d'extension radiale formant un flasque, ledit flasque s'étendant contre une paroi d'extension radiale de la chambre d'équilibrage afin d'améliorer la tenue radiale du réducteur de diamètre dans la chambre d'équilibrage lorsqu'il est monté ;
- le flasque du réducteur de diamètre est pressé contre la paroi d'extension radiale de la chambre d'équilibrage par le dispositif de rappel élastique afin d'éviter que le réducteur de diamètre ne bouge lorsque le mécanisme d'embrayage est en rotation ;
- le réducteur de diamètre comprend des premiers moyens de fixation agencés pour permettre l'assemblage du réducteur de diamètre sur le dispositif de rappel élastique. De manière avantageuse, les premiers moyens de fixation sont du type d'un rivetage ou d'un encliquetage ou d'un collage ou d'une soudure ou d'un surmoulage ;
- le réducteur de diamètre comprend des seconds moyens de fixation agencés pour permettre l'assemblage du réducteur de diamètre sur la paroi d'extension radiale de la chambre d'équilibrage. De manière avantageuse, les seconds moyens de fixation sont du type d'un rivetage ;
- les premiers moyens de fixation sont communs avec les seconds moyens de fixation. En d'autres termes, les premiers et seconds moyens de fixation sont identiques et formés par les mêmes moyens ;
- le flasque est en appui contre un porte-disques d'entrée du mécanisme d'embrayage (10), le porte-disques d'entrée délimitant la chambre d'équilibrage ;
- le flasque est en appui contre un couvercle extérieur de la chambre d'équilibrage ;
- le dispositif de rappel élastique s'étend entre la portée d'extension radiale du piston et la face latérale de la chambre d'équilibrage ;
- selon une forme particulière de réalisation, le dispositif de rappel élastique comprend :
   ∘ une première pièce annulaire configurée pour prendre appui contre une face d'appui du mécanisme d'embrayage (10) ;
   ∘ une seconde pièce annulaire configurée pour prendre appui contre le piston ;
   ∘ une pluralité d'éléments élastiques s'étendant entre la première pièce annulaire et la deuxième pièce annulaire ;
- dans la forme particulière de réalisation, la pluralité d'éléments élastiques est du type à ressorts hélicoïdaux ;
- dans la forme particulière de réalisation, la face d'appui contre laquelle le dispositif de rappel élastique est en appui est formée par une face d'un porte-disques d'entrée du mécanisme d'embrayage située en regard du piston ;
- le mécanisme d'embrayage conforme au premier aspect de l'invention est du type multidisques ;
- selon un mode de réalisation préféré, le mécanisme d'embrayage conforme au premier aspect de l'invention est du type à double embrayages et comprenant un premier embrayage piloté par un premier système d'actionnement et un deuxième embrayage piloté par un deuxième système d'actionnement. Selon une première variante, les premier et deuxième embrayages sont configurés dans une configuration radiale, le deuxième embrayage étant situé radialement à l'intérieur du premier embrayage. Selon une deuxième variante, les premier et deuxième embrayages sont configurés dans une configuration axiale, le deuxième embrayage étant situé axialement en arrière du premier embrayage. Dans l'une ou l'autre des variantes décrites ci-dessus, le diamètre extérieur de la chambre d'équilibrage du premier système d'actionnement est délimité par la portée cylindrique d'un premier réducteur de diamètre, et le diamètre extérieur de la chambre d'équilibrage du deuxième système d'actionnement est délimité par la portée cylindrique d'un deuxième réducteur de diamètre, les diamètres extérieurs de chaque chambre d'équilibrage étant identiques.

Selon un deuxième aspect de l'invention, il est proposé un système de transmission pour véhicule automobile comprenant un mécanisme d'embrayage conforme au premier aspect de l'invention ou à l'un quelconque de ses perfectionnements et dans lequel l'embrayage est couplé en rotation à :
- un arbre de sortie de la transmission par l'intermédiaire d'un porte-disques d'entrée ; et
- un voile d'entrée, ledit voile d'entrée étant couplé en rotation à un arbre d'entrée entrainé en rotation par au moins un vilebrequin d'un moteur.

Selon une variante de réalisation préférée, il est proposé un système de transmission pour véhicule automobile comprenant un mécanisme à double embrayage conforme au premier aspect de l'invention et selon son mode de réalisation préféré et dans lequel :
- le premier embrayage est couplé en rotation à un premier arbre de sortie de la transmission par l'intermédiaire d'un premier porte-disques d'entrée,
- le deuxième embrayage est couplé en rotation à un deuxième arbre de sortie de la transmission par l'intermédiaire d'un deuxième porte-disques d'entrée,
- le premier et le deuxième embrayages sont alternativement couplés en rotation à un voile d'entrée, ledit voile d'entrée étant couplé en rotation à un arbre d'entrée entrainé en rotation par au moins un vilebrequin.

Selon un troisième aspect de l'invention, il est proposé un dispositif de rappel élastique destiné à être logé dans une chambre d'équilibrage d'un système d'actionnement d'un embrayage du mécanisme d'embrayage afin de générer un effort à l'encontre d'un piston mis en mouvement par ledit système d'actionnement, ledit dispositif de rappel élastique comprenant :
- une première pièce annulaire destinée à prendre appui contre une face d'appui du mécanisme d'embrayage ;
- une seconde pièce annulaire destinée à prendre appui contre le piston ;
- une pluralité d'éléments élastiques s'étendant entre la première pièce annulaire et la deuxième pièce annulaire ;
- un réducteur de diamètre fixé contre une face opposée de la première pièce annulaire par rapport à la pluralité d'éléments élastiques, ledit réducteur de diamètre comprenant une portée cylindrique d'extension axiale s'étendant radialement à l'extérieur de la première et de la deuxième pièce annulaire, ladite portée cylindrique étant agencée pour pouvoir former un chemisage intérieur de la chambre d'équilibrage du mécanisme d'embrayage lorsque le dispositif de rappel élastique est monté sur le mécanisme d'embrayage.

Le dispositif de rappel élastique conforme au troisième aspect de l'invention peut comprendre avantageusement au moins un des perfectionnements ci-dessous, les caractéristiques techniques formant ces perfectionnements pouvant être prises seules ou en combinaison :
- la pluralité d'éléments élastiques est du type d'une pluralité de ressorts hélicoïdaux;
- le réducteur de diamètre comprend une portée d'extension radiale formant un flasque s'étendant le long de la première pièce annulaire ;
- le réducteur de diamètre comprend des moyens de centrage déformables situés sur une face extérieure de la portée cylindrique afin de pouvoir réaliser le centrage dudit réducteur de diamètre avec la chambre d'équilibrage du mécanisme d'embrayage lorsque le dispositif de rappel élastique est monté sur ledit mécanisme d'embrayage ;
- une face extérieure des moyens de centrage déformables a un diamètre supérieur ou égal au diamètre d'une face intérieure de la partie radiale supérieure de la chambre d'équilibrage ;
- les moyens de centrage déformables prennent la forme d'une pluralité de portées d'extension axiales s'étendant en saillie et radialement vers l'extérieur à partir de la face extérieure de la portée cylindrique ;
- les portées d'extension axiales formant les moyens de centrage déformables sont angulairement régulièrement réparties autour d'un axe de symétrie du dispositif de rappel élastique afin de permettre un appui homogène et de garantir un bon centrage ;
- les moyens de centrage déformables sont agencés pour pouvoir se déformer radialement afin de pouvoir faire correspondre un diamètre extérieur du réducteur de diamètre avec le diamètre d'une partie radiale supérieure de la chambre d'équilibrage du mécanisme d'embrayage lorsque le dispositif de rappel élastique est monté sur ledit mécanisme d'embrayage ;
- le réducteur de diamètre est en matière plastique.
- le réducteur de diamètre est surmoulé sur la première pièce annulaire.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue en perspective d'un réducteur de diamètre mis en oeuvre sur un mécanisme d'embrayage conforme au premier aspect de l'invention ;
- la FIGURE 2 illustre une vue de face du réducteur de diamètre illustré sur la FIGURE 1;
- la FIGURE 3 illustre une vue en perspective d'un exemple de réalisation de mécanisme d'embrayage conforme au premier aspect de l'invention ;
- la FIGURE 4 illustre une vue en coupe axiale du mécanisme d'embrayage illustré sur la FIGURE 3 ;
- la FIGURE 5 illustre une vue de détail des systèmes d'actionnement du mécanisme d'embrayage illustré sur la FIGURE 4 ;
- les FIGURE 6A et 6B illustrent des vues en coupe et de détail de l'insertion du réducteur de diamètre illustré sur la FIGURE 1 dans la chambre d'équilibrage du mécanisme d'embrayage ;
- la FIGURE 7 illustre une vue en perspective d'un dispositif de rappel élastique conforme au troisième aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

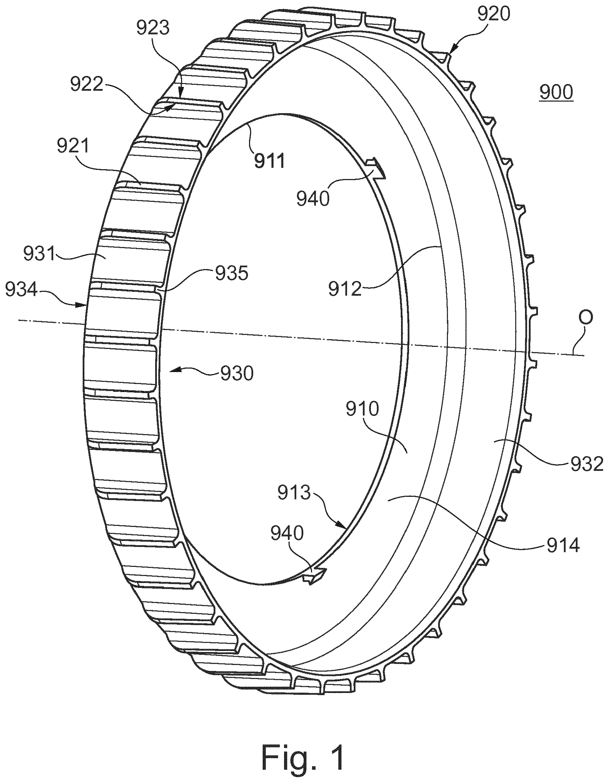

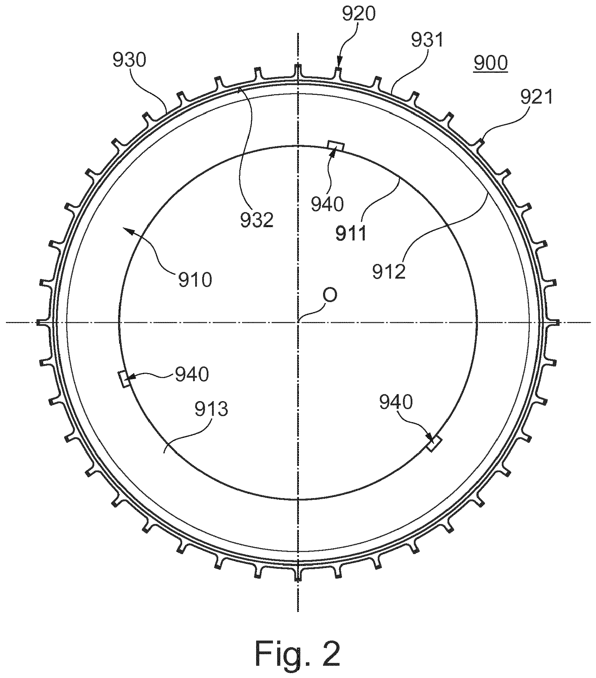

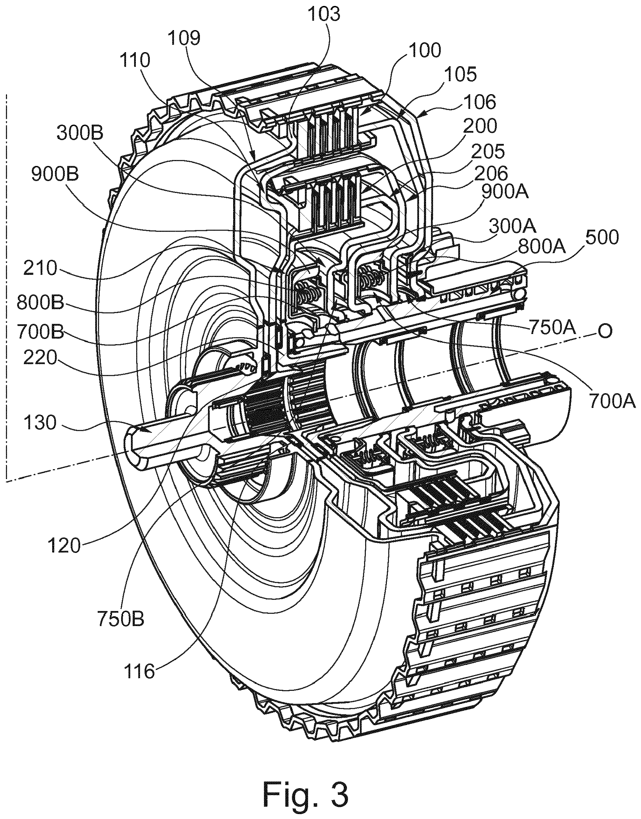

En référence aux FIGURES 1 et 2, un réducteur de diamètre 900 mis en oeuvre sur un mécanisme d'embrayage 10 conforme au premier aspect de l'invention et dont un exemple de réalisation sera décrit ultérieurement en référence aux FIGURES 3 à 5.

Le réducteur de diamètre 900 a une forme générale à la fois cylindrique et annulaire autour d'un axe longitudinal O. Il comprend une portée annulaire d'élongation radiale 910, c'est-à-dire perpendiculaire à l'axe longitudinal O, et une portée une portée cylindrique 930 située à l'extrémité radiale extérieure de la portée annulaire 910.

Dans une direction perpendiculaire à l'axe longitudinal O, la portée annulaire 910 est délimitée radialement vers l'intérieur par un contour intérieur circulaire 911 d'axe longitudinal O ; et elle est délimitée radialement vers l'extérieur par un contour extérieur circulaire 912 coaxial avec le contour circulaire intérieur 911.

Parallèlement à l'axe longitudinal O, la portée annulaire 910 est délimitée par une première face 913 annulaire et une deuxième face 914 annulaire, lesdites première et deuxième faces 913, 914 annulaires étant d'extension radiales et parallèles l'une à l'autre.

L'épaisseur axiale de la portée annulaire 910, c'est-à-dire la distance prise le long de l'axe longitudinal O entre la première face 913 annulaire et la deuxième face 914 annulaire est faible, typiquement de l'ordre de quelques millimètres.

En revanche, le diamètre du contour intérieur circulaire 911 est sensiblement inférieur au diamètre du contour extérieur circulaire 912, de sorte qu'une distance radiale entre ledit contour intérieur circulaire 911et ledit contour extérieur circulaire 912 est nettement inférieure à l'épaisseur axiale de la portée annulaire 910. Par exemple, l'épaisseur axiale de la portée annulaire 910 est environ 10 fois inférieure à la distance radiale entre ledit contour intérieur circulaire 911et ledit contour extérieur circulaire 912.

La portée cylindrique 930 du réducteur de diamètre est située à l'extrémité radiale supérieure de la portée annulaire 910, et elle s'étend axialement d'un seul côté par rapport à ladite portée annulaire 910, de sorte que la portée annulaire 910 forme un flasque. Plus particulièrement, la portée cylindrique 930 s'étend axialement entre d'une part une première face annulaire 934 située dans le prolongement de la première face 913 annulaire de la portée annulaire 910, et d'autre part une deuxième face annulaire 935 située axialement au-delà de la deuxième face 914 de la portée annulaire 910.

Radialement, la portée cylindrique 930 est délimitée par une face intérieure 932 cylindrique et une face extérieure 931 cylindrique dont un diamètre est supérieur à celui de la face intérieure 932 cylindrique.

L'épaisseur radiale de la portée cylindrique 930, c'est-à-dire la distance prise perpendiculairement à l'axe longitudinal O entre la face intérieure 932 cylindrique et la face extérieure 931 cylindrique est faible, typiquement de l'ordre de quelques millimètres.

Ainsi la portée annulaire 910 et la portée cylindrique 930 du réducteur de diamètre 900 forment collectivement un manchon cylindrique dont la première face 913 annulaire de la portée annulaire 910 forme un flasque pour ledit manchon.

De manière avantageuse, et tel que représenté sur la FIGURE 1, la face extérieure 931 de la portée cylindrique 930 comprend une pluralité de nervures 920 formant des moyens de centrage 920 lorsque le réducteur de diamètre 900 est monté dans la chambre d'équilibrage du mécanisme d'embrayage. Dans l'exemple illustré sur la FIGURE 1, la portée cylindrique 930 est surmontée d'une pluralité de nervures angulairement régulièrement répartis autour de l'axe longitudinal O.

Chaque nervure 920 s'étend axialement entre la première face annulaire 934 et la deuxième face annulaire 935 de la portée cylindrique. Radialement, chaque nervure 920 s'étend en saillie depuis la face extérieure 931 de la portée cylindrique, de sorte que l'extrémité radiale extérieure 921 des nervures 920 est d'un diamètre supérieur à celui de la face extérieure 931 de la portée cylindrique 930. Avantageusement, les extrémités radiales extérieures 921 de toutes les nervures 920 ont un même diamètre.

Dans un plan perpendiculaire à l'axe longitudinal O, chaque nervure 920 est délimitée par une première face latérale 922 et une deuxième face latérale 923. La distance entre la première face latérale 922 et la deuxième face latérale 923 est avantageusement inférieure à la distance radiale entre la face extérieure 931 de la portée cylindrique 930 et l'extrémité radiale extérieure 921 des nervures 920. Cette configuration avantageuse permet notamment de rendre les nervures 920 déformables lorsqu'un effort radial est exercé sur l'extrémité radiale extérieur 921 desdites nervures.

Avantageusement encore, le réducteur de diamètre 900 est réalisé en matière plastique, et par exemple selon un procédé de moulage. Le plastique est avantageusement choisi de manière à être déformable, c'est-à-dire comprenant un domaine de déformation élastique qui le rend compatible avec l'usage automobile auquel le réducteur de diamètre 900 est destiné.

Sur le réducteur de diamètre 900 illustré sur la FIGURE 1, les dimensions suivantes sont au moins en partie - et préférentiellement toutes - sensiblement égales les unes aux autres, notamment afin de permettre une fabrication dudit réducteur de moulage 900 par moulage et injection de matière plastique :
- l'épaisseur axiale de la portée annulaire 910 prise entre le première face 913 annulaire et la deuxième face 914 ; et/ou
- l'épaisseur radiale de la portée cylindrique 930 prise entre la face intérieure 932 cylindrique et la face extérieure 931 cylindrique ; et/ou
- la distance entre la première face latérale 922 et la deuxième face latérale 923 de chaque nervure 920.

Enfin, le réducteur de diamètre 900 comprend avantageusement des moyens de fixation 940 configurés pour permettre de le fixer solidairement à une pièce du mécanisme d'embrayage, par exemple un dispositif de rappel élastique. Les moyens de fixation 940 sont avantageusement du type d'un rivetage ou d'un collage ou d'une soudure ou d'un surmoulage ou d'un encliquetage tel que représenté sur la FIGURE 1.

Les moyens de fixation 940 prennent ici la forme de fiches qui s'étendent en saillie axialement de la deuxième face 914 de la portée annulaire 910, dans la direction de la deuxième face annulaire 935 de la portée cylindrique 930.

Le réducteur de diamètre 900 illustré sur la FIGURE 1 comprend trois moyens de fixation 940 qui sont angulairement régulièrement répartis autour de l'axe longitudinal O.

En référence aux FIGURES 3 à 5, un mécanisme d'embrayage 10 conforme au deuxième aspect de l'invention va maintenant être décrit plus en détail.

Le mécanisme d'embrayage 10 conforme au deuxième aspect de l'invention est préférentiellement du type à double embrayage humide, et préférentiellement encore dans une position dite radiale, le premier embrayage 100 étant situé à l'extérieur du deuxième embrayage 200. Alternativement, le mécanisme à double embrayages 10 peut être dans une configuration dite axiale, le premier embrayage 100 étant situé devant AV le deuxième embrayage 200. Bien entendu, l'invention conforme à son deuxième aspect ne se limite pas aux mécanismes à double embrayages 10 mais comprend aussi les mécanismes à simple embrayage humide.

Le mécanisme à double embrayages 10 est intégré sur une chaine de transmission 1 comprenant une transmission couplée en rotation au mécanisme d'embrayage 100.

D'une manière générale, le mécanisme à double embrayages 10 est agencé pour pouvoir coupler en rotation un arbre d'entrée non représenté à un premier arbre de transmission A1 ou alternativement à un deuxième arbre de transmission A2 par l'intermédiaire respectivement du premier embrayage 100 ou du deuxième embrayage 200.

Dans le contexte de l'invention, l'arbre d'entrée est entrainé en rotation par au moins un vilebrequin d'un moteur, par exemple un moteur thermique ; et les premier et deuxième arbres de transmission A1 A2 sont coaxiaux et destinés à être couplés en rotation à la transmission telle que par exemple une boite de vitesses du type de celles équipant des véhicules automobiles.

Comme illustré sur les FIGURES 3 à 5, le premier embrayage 100 et le deuxième embrayage 200 sont avantageusement du type multidisques. Chaque embrayage multidisques comprend d'une part une pluralité de premiers éléments de friction 101, 201, tels que par exemple des flasques, liés solidairement en rotation à l'arbre d'entrée, et d'autre part une pluralité de deuxièmes éléments de friction 102, 202, tels que par exemples des disques de friction, liés solidairement en rotation à au moins l'un des arbres de transmission A1, A2.

Le premier arbre de transmission A1 est couplé en rotation à l'arbre d'entrée et entraîné par lui en rotation lorsque le premier embrayage 100 est configuré dans une position dite embrayée pour laquelle la pluralité de premiers éléments de friction 101 est couplée en rotation à la pluralité de deuxièmes éléments de friction 102. Alternativement, le premier arbre de transmission A1 est découplé en rotation de l'arbre d'entrée lorsque le premier embrayage 100 est configuré dans une position dite débrayée pour laquelle la pluralité de premiers éléments de friction 101 est découplée en rotation à la pluralité de deuxièmes éléments de friction 102.

De manière analogue, le deuxième arbre de transmission A2 est couplé en rotation à l'arbre d'entrée et entraîné par lui en rotation lorsque le deuxième embrayage 200 est configuré dans une position embrayée pour laquelle la pluralité de premiers éléments de friction 201 est couplée en rotation à la pluralité de deuxièmes éléments de friction 202. Alternativement, le deuxième arbre de transmission A2 est découplé en rotation de l'arbre d'entrée lorsque le deuxième embrayage 200 est configuré dans une position dite débrayée pour laquelle la pluralité de premiers éléments de friction 201 est découplée en rotation à la pluralité de deuxièmes éléments de friction 202.

Le premier embrayage 100 et le deuxième embrayage 200 sont agencés pour transmettre alternativement une puissance dite d'entrée - un couple et une vitesse de rotation - de l'arbre d'entrée, à l'un des deux arbres de transmission A1 A2, en fonction de la configuration respective de chaque embrayage 100 et 200 et par l'intermédiaire d'un voile d'entrée 109.

Le premier embrayage 100 et le deuxième embrayage 200 sont agencés pour ne pas être simultanément dans la même configuration embrayée. En revanche, les premier et deuxième embrayages 100, 200 peuvent simultanément être configurés dans leur position débrayée.

Le mécanisme à double embrayages 10 comprend un élément d'entrée qui est couplé en rotation d'une part à l'arbre d'entrée et d'autre part au voile d'entrée 109 afin de transmettre la puissance - le couple et la vitesse de rotation - générée au niveau du moteur à l'un des embrayages 100, 200 du mécanisme à double embrayages 10. De préférence, l'élément d'entrée du mécanisme à double embrayages 10 comprend un moyeu d'entrée 130, préférentiellement en rotation autour de l'axe longitudinal O. Sur son élongation intérieure, le moyeu d'entrée 130 est lié en rotation et/ou axialement à l'arbre d'entrée par l'intermédiaire de son élongation intérieure 1301, et éventuellement via un dispositif d'amortissement non représenté tel qu'un double volant amortisseur par exemple.

Le moyeu d'entrée 130 comprend une élongation extérieur 1302 qui est couplée au voile d'entrée 109, et plus particulièrement à une extrémité intérieure 1091 du voile d'entrée 109. L'extrémité intérieure 1091 est située vers l'avant AV du voile d'entrée 109. Préférentiellement, le voile d'entrée 109 et le moyeu d'entrée 130 sont solidaires, par exemple fixés par soudage et/ou par rivetage.

Le voile d'entrée 109 comprend une extrémité supérieure 1092 par laquelle le voile d'entrée 109 est lié en rotation au premier embrayage 100. Cette liaison est réalisée par l'intermédiaire d'une portée d'élongation axiale extérieure 1061 d'un premier porte-disques d'entrée 106, le premier porte-disques d'entrée 106 étant lié en rotation au voile d'entrée 109, préférentiellement par coopération de formes, par exemple par des cannelures au niveau de l'extrémité avant AV de ladite portée d'élongation axiale extérieure 1061.

Le premier embrayage 100 et le deuxième embrayage 200 sont chacun commandés par un système d'actionnement 300A, 300B qui seront décrits ultérieurement. Chaque système d'actionnement 300A, 300B est agencé pour pouvoir configurer respectivement le premier embrayage 100 et le deuxième embrayage 200 dans une configuration quelconque comprise entre la configuration embrayée et la configuration débrayée.

Le premier système d'actionnement 300A est lié au premier embrayage 100 par l'intermédiaire du premier piston 105 comprenant une premiere partie radialement extérieure et une deuxième partie radialement intérieure. D'une manière générale, le premier piston 105 est agencé pour transmettre au premier embrayage 100 un effort axial E1 exercé parallèlement à l'axe O via sa première partie radialement extérieure, sa deuxième partie radialement intérieure collaborant avec un générateur d'effort pour configurer le premier embrayage 100 dans l'une des configurations détaillées précédemment. Au niveau de sa première partie radialement intérieure, le premier piston 105 comprend une pluralité de premières portées d'extension axiales 1051 extérieures qui s'étendent axialement vers l'avant AV pour pouvoir presser les premiers éléments de friction 101 contre les deuxièmes éléments de friction 102 d'une part, et contre un moyen de réaction extérieur 103 lié mécaniquement au voile d'entrée 109 d'autre part. Lorsque les premiers éléments de friction 101 sont écartés des deuxièmes éléments de friction 102, alors le premier embrayage 100 est configuré dans sa configuration débrayée. En revanche, lorsque les premiers éléments de friction 101 sont pressés contre les deuxièmes éléments de friction 102, alors le premier embrayage 100 est configuré dans sa configuration embrayée.

Le premier piston 105 prend la forme d'une tôle ondulée et incurvée axialement vers l'avant AV à son extrémité radiale extérieure.

Le premier piston 105 comprend une portée d'extension radiale supérieure 1052 située en arrière AR des premières portées d'extension axiales 1051. La première portée d'extension radiale supérieure 1052 s'étend radialement parallèlement à l'axe transversal T depuis le premier embrayage 100 jusqu'en limite intérieur du deuxième embrayage 200.

Une portée d'extension axiale intermédiaire 1053 du premier piston 105, parallèle à l'axe longitudinal O prolonge la portée d'extension radiale supérieure 1052 du premier piston 105 partiellement sous le deuxième embrayage 200 et vers l'avant AV du mécanisme à double embrayages 10. La portée d'extension axiale intermédiaire 1053 est située radialement sous le deuxième embrayage 200 et axialement vers l'arrière AR.

Enfin, le premier piston 105 comprend une première portée d'extension radiale intérieure 1055 et reliée à la portée d'extension axiale intermédiaire 1053 par l'intermédiaire d'une première zone incurvée 1054. L'extrémité radiale intérieure de la portée d'extension radiale intérieure 1055 est située à distance d'un moyeu support 500 qui sera décrit ultérieurement.

À titre d'exemple non limitatif, le premier piston 105 peut être obtenu par emboutissage.

Le moyen de réaction extérieur 103 est solidaire du voile d'entrée 109. De préférence, le moyen de réaction extérieur 103 est relié au voile d'entrée 109 par l'intermédiaire du porte-disques d'entrée 106.

Le moyen de réaction extérieur 103 a une forme complémentaire à celle des premiers ou deuxièmes éléments de friction 101, 102, de manière à permettre un couplage par friction des premiers et deuxièmes éléments de friction 101, 102 lorsque le premier système d'actionnement 300A exerce le premier effort axial E1 vers l'avant AV pour configurer le premier embrayage 100 dans sa position embrayée. A contrario, lorsque le premier piston 105 est repoussé vers l'arrière AR par des éléments élastiques de rappel qui seront décrits ultérieurement, alors les premiers éléments de frictions 101 du premier embrayage 100 se séparent des deuxièmes éléments de friction 102, permettant de découpler lesdits éléments de friction et permettant ainsi de configurer le premier embrayage 100 dans sa configuration débrayée.

Le premier embrayage 100 est destiné à être couplé en rotation au premier arbre de transmission A1 par l'intermédiaire d'un premier porte-disques de sortie 110 formant un élément de sortie dudit premier embrayage 100. Plus particulièrement, le premier porte-disques de sortie 110 est couplé en rotation aux deuxièmes éléments de friction 102 par l'intermédiaire d'une extrémité supérieure 1101 que le porte-disques de sortie 110 comprend. Plus particulièrement encore, le premier porte-disques de sortie 110 est couplé en rotation à un premier moyeu de sortie 120 par l'intermédiaire d'une extrémité intérieure 1102 que le premier porte-disques de sortie 110 comprend.

Le premier porte-disques de sortie 110 comporte sur sa périphérie radiale extérieure une élongation axiale 107 qui est munie d'une denture destinée à coopérer avec une denture complémentaire sur chaque deuxième élément de friction 102, et plus particulièrement à la périphérie radiale intérieure de chaque deuxième élément de friction 102 du premier embrayage 100. L'élongation axiale 107 du premier porte-disques de sortie 110 est située radialement sous les premiers 101 et deuxièmes 102 éléments de friction du premier embrayage 100. Le premier porte-disques de sortie 110 est ainsi couplé en rotation par engrènement avec les deuxièmes éléments de friction 102 du premier embrayage 100.

Le premier moyeu de sortie 120 comporte radialement à l'intérieur des cannelures axiales agencées pour coopérer avec des cannelures complémentaires situées sur le premier arbre de transmission A1 de manière à réaliser un couplage en rotation.

Un palier radial 117 est interposé entre le premier moyeu de sortie 120 et le moyeu d'entrée 130 afin de supporter les efforts radiaux du moyeu d'entrée 130 et/ou du voile d'entrée 109 malgré les vitesses de rotation différentes auxquelles peuvent respectivement tourner l'arbre d'entrée et le premier arbre de transmission A1.

De manière analogue, le deuxième embrayage 200 du mécanisme à double embrayages 10 est de conception similaire à celle du premier embrayage 100.

Le deuxième système d'actionnement 300B est lié au deuxième embrayage 200 par l'intermédiaire d'une part d'un deuxième piston 205.

Le deuxième piston 205 est situé axialement entre un deuxième porte-disques de sortie 206 et le deuxième embrayage 200.

Le deuxième système d'actionnement 300B est lié au deuxième embrayage 200 par l'intermédiaire du deuxième piston 205 comprenant une premier partie radialement extérieure et une deuxième partie radialement intérieure. D'une manière générale, le deuxième piston 205 est agencé pour transmettre au deuxième embrayage 200 un effort axial E2 exercé parallèlement à l'axe longitudinal O via sa première partie radialement extérieure collaborant avec les éléments de friction 201, 202 dudit deuxième embrayage 200, et de sa deuxième partie radialement intérieure collaborant avec un générateur d'effort pour configurer le deuxième embrayage 200 dans l'une des configurations détaillées précédemment. Au niveau de sa première partie radialement intérieure, le deuxième piston 205 comprend une pluralité de deuxièmes portées d'extension axiales 2051 qui s'étendent axialement vers l'avant AV pour pouvoir presser les premiers éléments de friction 201 contre les deuxièmes éléments de friction 202 d'une part, et contre un moyen de réaction intérieur 203 du deuxième embrayage 200 d'autre part. Lorsque les premiers éléments de friction 201 sont écartés des deuxièmes éléments de friction 202, alors le deuxième embrayage 200 est configuré dans sa configuration débrayée. En revanche, lorsque les premiers éléments de friction 201 sont pressés contre les deuxièmes éléments de friction 202, alors le deuxième embrayage 200 est configuré dans sa configuration embrayée.

Le deuxième piston 205 prend la forme d'une tôle ondulée et incurvée axialement vers l'avant AV à son extrémité radiale extérieure.

Le deuxième piston 205 comprend une portée d'extension radiale supérieure 2052 située en arrière AR des deuxièmes portées d'extension axiales 2051. La portée d'extension radiale supérieure 2052 du deuxième piston 205 est interposée axialement entre un deuxième porte-disques d'entrée 206 et le deuxième embrayage 200. La portée d'extension radiale supérieure 2052 s'étend radialement depuis le deuxième embrayage 200 jusqu'à l'intérieur du deuxième embrayage 200, et plus particulièrement à l'extérieur d'une portée d'extension axiale intermédiaire 2063 du deuxième porte-disques de sortie 206.

Une portée d'extension axiale intermédiaire 2053 du deuxième piston 205 prolonge vers l'avant AV et parallèlement à l'axe O la portée d'extension radiale supérieure 2052 du deuxième piston 205. La portée d'extension axiale intermédiaire 2053 est située radialement à l'intérieur du deuxième embrayage 200 et à l'extérieur de la portée d'extension axiale intermédiaire 2063 du deuxième porte-disques de sortie 206.

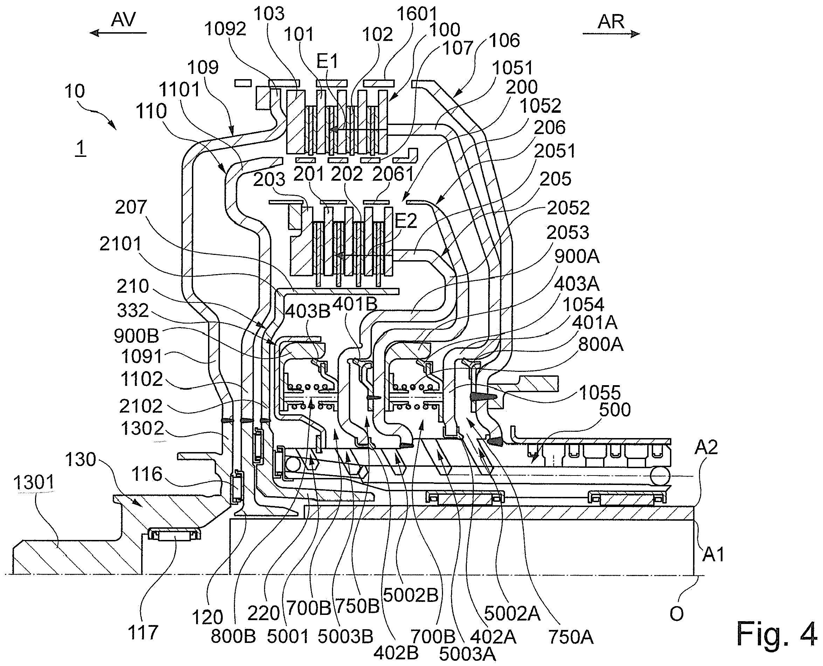

Enfin, le deuxième piston 205 comprend une pluralité de deuxièmes portées d'extensions radiales intérieures 2055 et reliées à la portée d'extension axiale intermédiaire 2053 par l'intermédiaire d'une zone incurvée 2054 du deuxième piston 205. La zone incurvée 2054 du deuxième piston 205 prend la forme d'un « S » dans le plan de coupe transversal illustré sur la FIGURE 4.

À titre d'exemple non limitatif, le deuxième piston 205 peut être obtenu par emboutissage.

Le deuxième porte-disques de sortie 206 du mécanisme à double embrayages 10 comprend une partie d'élongation axiale extérieure 2061 orientée vers l'avant AV. La partie d'élongation axiale extérieure 2061 du deuxième porte-disques de sortie 206 est située radialement à l'extérieur du deuxième embrayage 200, et elle s'étend axialement sur toute la longueur dudit deuxième embrayage 200. Le deuxième porte-disques de sortie 206 comprend aussi une portée d'extension radiale supérieure 2062 située en arrière AR de la partie d'élongation axiale extérieure 2061. La portée d'extension radiale supérieure 2062 s'étend radialement depuis l'extérieur du deuxième embrayage 200 jusqu'à l'intérieur du deuxième embrayage 200.

Une portée d'extension axiale intermédiaire 2063 du deuxième porte-disques de sortie 206 prolonge vers l'avant AV et parallèlement à l'axe O la portée d'extension radiale supérieure 2062 du deuxième porte-disques de sortie 206. La portée d'extension axiale intermédiaire 2063 est située radialement sous la deuxième portée axiale 2053 du deuxième piston 205.

Enfin, le deuxième porte-disques de sortie 206 comprend une portée d'extension radiale intérieure 2065 reliée à la portée d'extension axiale intermédiaire 2063 par l'intermédiaire d'une zone incurvée 2064. L'extrémité radiale intérieure de la portée d'extension radiale intérieure 2065 est fixée solidairement contre le moyeu support 500, par exemple par soudage.

Ainsi, le premier porte-disques de sortie 106 et le deuxième porte-disques de sortie 206 sont couplées en rotation par l'intermédiaire du moyeu support 500 : chaque porte-disques de sortie 106, 206 est respectivement fixé solidairement audit moyeu support 500 par l'intermédiaire de son extrémité radiale intérieure.

Le moyen de réaction intérieur 203 est solidaire du deuxième porte-disques d'entrée 206, et plus particulièrement au niveau de sa partie d'élongation axiale extérieure 2061 à laquelle le moyen de réaction intérieur 203 est fixé par tous moyens, tels que par exemple par soudage ou par rivetage. Alternativement, le moyen de réaction intérieur 203 et le deuxième porte-disques d'entrée 206 sont issus de matière. Le moyen de réaction extérieur 203 a une forme complémentaire à celle des premiers ou deuxièmes éléments de friction 201, 202, de manière à permettre un couplage par friction des premiers et deuxièmes éléments de friction 201, 202 lorsque le deuxième système d'actionnement 300B exerce un effort E2 axial vers l'avant AV pour configurer le deuxième embrayage 200 dans sa position embrayée. A contrario, lorsque le deuxième piston 205 est repoussé vers l'arrière AR par des éléments élastiques de rappel qui seront décrits ultérieurement, alors les premiers éléments de frictions 201 du deuxième embrayage 200 se séparent des deuxièmes éléments de friction 202, permettant de découpler lesdits éléments de friction 201, 202 et permettant ainsi de configurer le deuxième embrayage 200 dans sa configuration débrayée.

Le deuxième embrayage 200 est destiné à être couplé en rotation au deuxième arbre de transmission A2 par l'intermédiaire d'un deuxième porte-disques de sortie 210 formant un élément de sortie dudit deuxième embrayage 200. Plus particulièrement, le deuxième porte-disques de sortie 210 est couplé en rotation aux deuxièmes éléments de friction 202 par l'intermédiaire d'une extrémité supérieure 2101 que le deuxième porte-disques de sortie 210 comprend. Le deuxième porte-disques de sortie 210 est couplé en rotation à un deuxième moyeu de sortie 220 par l'intermédiaire d'une extrémité intérieure 2102, que le deuxième porte-disques de sortie 210 comprend.

Le deuxième porte-disques de sortie 210 comporte sur sa périphérie radiale extérieure une élongation axiale 207 qui est munie d'une denture destinée à coopérer avec une denture complémentaire sur chaque deuxième élément de friction 202, et plus particulièrement à la périphérie radiale intérieure de chaque deuxième élément de friction 202 du deuxième embrayage 200. Le deuxième porte-disques de sortie 210 est ainsi couplé en rotation par engrènement avec les deuxièmes éléments de friction 202 du deuxième embrayage 200.

À cet effet, le deuxième moyeu de sortie 220 comporte au niveau de son extrémité intérieur 2102 des cannelures axiales agencées pour coopérer avec des cannelures complémentaires situées sur le deuxième arbre de transmission A2, de manière à réaliser un couplage en rotation.

Par ailleurs, un palier axial 116 est intercalé entre le premier porte-disques de sortie 110 et le deuxième porte-disques de sortie 210 afin de pouvoir transmettre un effort axial entre les deux porte-disques de sortie 110, 210 qui peuvent tourner à des vitesses différentes lorsque les premier et deuxième embrayages 100, 200 sont configurés dans une configuration différente.

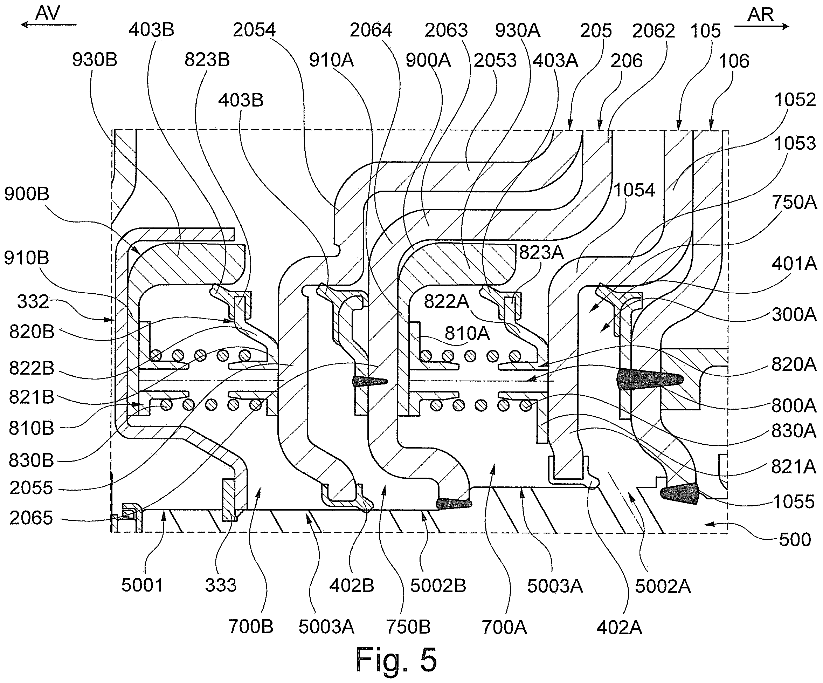

De préférence, et tel qu'illustré plus particulièrement sur la FIGURE 5, chaque système d'actionnement 300A, 300B comprend en outre un dispositif de rappel élastique 800A, 800B agencé pour générer un effort axial orienté vers l'arrière AR et s'opposant au déplacement du piston 105, 205 correspondant lorsqu'il est poussé vers l'avant AV pour embrayer l'embrayage 100, 200 correspondant.

En particulier, le premier dispositif de rappel élastique 800A associé au premier embrayage 100 comprend :
- une première pièce annulaire 810A destinée à prendre appui contre une face d'appui du mécanisme à double embrayages 10, et plus particulièrement au niveau de la portée d'extension radiale intérieure 2065 du deuxième porte-disques d'entrée 206 ;
- une seconde pièce annulaire 820A destinée à prendre appui contre le premier piston 105, et plus particulièrement au niveau de la portée d'extension radiale intérieure 1055 dudit premier piston 105 ;
- une pluralité d'éléments élastiques 830A s'étendant entre la première pièce annulaire 810A et la seconde pièce annulaire 820A du premier dispositif de rappel élastique 800A. De manière avantageuse, la pluralité d'éléments élastiques 830A, sont du type du type à ressorts hélicoïdaux.

De manière comparable, le deuxième dispositif de rappel élastique 800B associé au deuxième embrayage 200 comprend :
- une première pièce annulaire 810B destinée à prendre appui contre une face d'appui du mécanisme à double embrayages 10, et plus particulièrement au niveau d'une plaque de chemisage 332 qui est bloquée axialement vers l'avant AV par un anneau de blocage axial 333 logé dans une gorge circonférentielle de la face extérieure du moyeu support 500 ;
- une seconde pièce annulaire 820B destinée à prendre appui contre le deuxième piston 205, et plus particulièrement au niveau de la portée d'extension radiale intérieure 2055 dudit deuxième piston 205 ;
- une pluralité d'éléments élastiques 830B s'étendant entre la première pièce annulaire 810B et la seconde pièce annulaire 820B du deuxième dispositif de rappel élastique 800B. De manière avantageuse, la pluralité d'éléments élastiques 830B, sont du type du type à ressorts hélicoïdaux.

Conformément à l'invention prise selon son deuxième aspect, chaque système d'actionnement 300A, 300B du mécanisme à double embrayages 10 illustré sur les FIGURES 3 à 5 comprend :
- une chambre de commande 750A, 750B agencée pour recevoir un fluide pressurisé ;
- une chambre d'équilibrage 700A, 700B délimitée en partie par un piston, le piston étant mobile axialement et délimitant radialement vers l'extérieur la chambre de commande par une portée d'extension axiale, ledit piston s'étendant radialement à l'extérieur de ladite chambre de commande afin d'embrayer ou de débrayer l'embrayage sous l'effet du fluide pressurisé contenu dans la chambre de commande ;
- un dispositif de rappel élastique 800A, 800B tel que décrit précédemment, ledit dispositif de rappel élastique étant logé dans la chambre d'équilibrage 700A, 700B correspondante et s'étendant entre le piston 105, 205 et la face d'appui correspondantes du mécanisme à double embrayages 10.

La chambre de commande 750A du premier système d'actionnement 300A est agencée pour recevoir un certain volume de fluide hydraulique sous pression afin de générer l'effort axial E1 sur la portée d'extension radiale intérieure 1055 du premier piston 105 et de configurer ainsi le premier embrayage 100 dans l'une des configurations décrites précédemment. Le fluide hydraulique pressurisé est avantageusement acheminé par l'intermédiaire de conduits de circulation fluidiques haute pression traversant au moins en partie le moyeu support 500 et débouchant dans la chambre de commande 750A du premier système d'actionnement 300A au niveau d'une face extérieure dudit moyeu support 500 par un conduit d'alimentation 5002A.

La chambre de commande 750A du premier système d'actionnement 300A est ainsi avantageusement délimitée :
- radialement vers l'intérieur, par une portion du moyeu support 500 ;
- axialement vers l'arrière AR, par une partie d'élongation radiale intérieure du premier porte-disques d'entrée 106 ;
- radialement vers l'extérieur, par la portée d'extension axiale intermédiaire 1053 et la première zone incurvée 1054 du premier piston 105 ; et
- axialement vers l'avant AV, par la portée d'extension radiale intérieure 1055 du premier piston 105.

On notera aussi que l'étanchéité de la chambre de commande 750A du premier système d'actionnement 300A est garantie par la présence :
- d'un premier joint d'étanchéité 401A situé entre la partie radiale intérieure du premier porte-disques d'entrée 106 et la portée d'extension axiale intermédiaire 1053 du premier piston 105 ;
- d'un deuxième joint d'étanchéité 402A situé axialement entre l'extrémité radiale intérieure de la portée d'extension radiale intérieure 1055 du premier piston 105 et le moyeu support 500.

La chambre d'équilibrage 700A du premier système d'actionnement 300A est agencée pour recevoir un certain volume de fluide hydraulique permettant de lubrifier le premier dispositif de rappel élastique 800A logé dans ladite chambre d'équilibrage 700A. Le fluide de lubrification est avantageusement acheminé par l'intermédiaire de conduits de circulation fluidiques basse pression traversant axialement le moyeu support 500 et débouchant dans la chambre d'équilibrage 700A au niveau d'une face extérieure dudit moyeu support 500 par un conduit d'alimentation 5003A.

La chambre d'équilibrage 700A du premier système d'actionnement 300A est ainsi avantageusement délimitée :
- radialement vers l'intérieur, par une portion du moyeu support 500 ;
- axialement vers l'arrière AR, par la portée d'extension radiale intérieure 1055 du premier piston 105 ;
- radialement vers l'extérieur, par la portée d'extension axiale intermédiaire 2063 du deuxième porte-disques de sortie 206 ; et
- axialement vers l'avant AV, par la portée d'extension radiale intérieure 2065 du deuxième porte-disques de sortie 206.

On notera aussi que l'étanchéité de la chambre d'équilibrage 700A du premier système d'actionnement 300A est garantie par la présence :
- d'un troisième joint d'étanchéité 403A qui s'étend entre deuxième pièce annulaire 820A du premier dispositif de rappel élastique 800A et une portée cylindrique extérieure 930 d'un réducteur de diamètre 900 logé dans la chambre d'équilibrage 700A et formant un chemisage intérieur de ladite chambre d'équilibrage 700A ; et
- du deuxième joint d'étanchéité 402A situé axialement entre l'extrémité radiale intérieure de la portée d'extension radiale intérieure 1055 du premier piston 105 et le moyeu support 500.

De manière comparable, la chambre de commande 750B du deuxième système d'actionnement 300B est agencée pour recevoir un certain volume de fluide hydraulique sous pression afin de générer l'effort axial E2 sur la portée d'extension radiale intérieure 2055 du deuxième piston 205 et de configurer ainsi le deuxième embrayage 200 dans l'une des configurations décrites précédemment. Le fluide hydraulique pressurisé est avantageusement acheminé par l'intermédiaire de conduits de circulation fluidiques haute pression traversant au moins en partie le moyeu support 500 et débouchant dans la chambre de commande 750B du deuxième système d'actionnement 300B au niveau d'une face extérieure dudit moyeu support 500 par un conduit d'alimentation 5002B.

La chambre de commande 750B du deuxième système d'actionnement 300B est ainsi avantageusement délimitée :
- radialement vers l'intérieur, par une portion du moyeu support 500 ;
- axialement vers l'arrière AR, par la portée d'extension radiale intérieure 2065 du deuxième porte-disques d'entrée 206 ;
- radialement vers l'extérieur, par la zone incurvée 2054 du deuxième piston 205 ; et
- axialement vers l'avant AV, par la portée d'extension radiale intérieure 2055.

On notera aussi que l'étanchéité de la chambre de commande 750B du deuxième système d'actionnement 300B est garantie par la présence :
- d'un premier joint d'étanchéité 401B situé entre la portée d'extension radiale intérieure 2065 du deuxième porte-disques d'entrée 206 et la zone incurvée 2054 du deuxième piston 205 ;
- d'un deuxième joint d'étanchéité 402B situé axialement entre l'extrémité radiale intérieure de la portée d'extension radiale intérieure 2055 du deuxième piston 205 et le moyeu support 500.

La chambre d'équilibrage 700B du deuxième système d'actionnement 300B est agencée pour recevoir un certain volume de fluide hydraulique permettant de lubrifier le deuxième dispositif de rappel élastique 800B logé dans ladite chambre d'équilibrage 700B. Le fluide de lubrification est avantageusement acheminé par l'intermédiaire de conduits de circulation fluidiques basse pression traversant axialement le moyeu support 500 et débouchant dans la chambre d'équilibrage 700B du deuxième système d'actionnement 300B au niveau d'une face extérieure dudit moyeu support 500 par un conduit d'alimentation 5003B.

Complémentairement, les conduits de circulation fluidique basse pression comprennent un conduit d'alimentation principal 5001 situé au niveau de l'extrémité axiale avant AV du moyeu support 500. Le conduit d'alimentation principal est d'orientation radiale et permet d'établir une communication fluidique du fluide de lubrification à l'aplomb des embrayages 100, 200 afin d'améliorer leur lubrification durant le fonctionnement du mécanisme à double embrayages 10 conforme au deuxième aspect de l'invention.

La chambre d'équilibrage 700B du deuxième système d'actionnement 300B est ainsi avantageusement délimitée :
- radialement vers l'intérieur, par une portion du moyeu support 500 ;
- axialement vers l'arrière AR, par la portée d'extension radiale intérieure 2055 du deuxième piston 205 ;
- radialement vers l'extérieur et axialement vers l'avant AV, par la plaque de chemisage 332.

On notera aussi que l'étanchéité de la chambre d'équilibrage 700B du deuxième système d'actionnement 300B est garantie par la présence :
- d'un troisième joint d'étanchéité 403B qui s'étend entre deuxième pièce annulaire 820B du deuxième dispositif de rappel élastique 800B et une portée cylindrique extérieure de la plaque de chemisage 332 ; et
- du deuxième joint d'étanchéité 402B situé axialement entre l'extrémité radiale intérieure de la portée d'extension radiale intérieure 2055 du deuxième piston 205 et le moyeu support 500.

On comprendra à ce stade de la description que, sous l'effet du fluide pressurisé remplissant la chambre de commande 750A, 750B de l'un des systèmes d'actionnement 300A, 300B, les premier et deuxième organes de transmission de force 105, 205 sont déplacés axialement vers l'avant AV suivant les efforts axiaux E1, E2 afin de configurer respectivement les premier 100 et deuxième 200 embrayages dans leur configuration embrayée. Complémentairement, sous l'effet des premier et deuxième dispositifs de rappel élastique 800A, 800B logés dans les chambres d'équilibrage 700A, 700B correspondantes, les organes de transmission de force 105, 205 sont repoussés vers l'arrière AR afin de configurer respectivement les premier 100 et deuxième 200 embrayages dans leur configuration débrayée.

Les systèmes d'actionnement 300A, 300B forment ainsi des générateurs d'efforts pour les organes de transmission de force 105, 205 des embrayages 100, 200 correspondants.

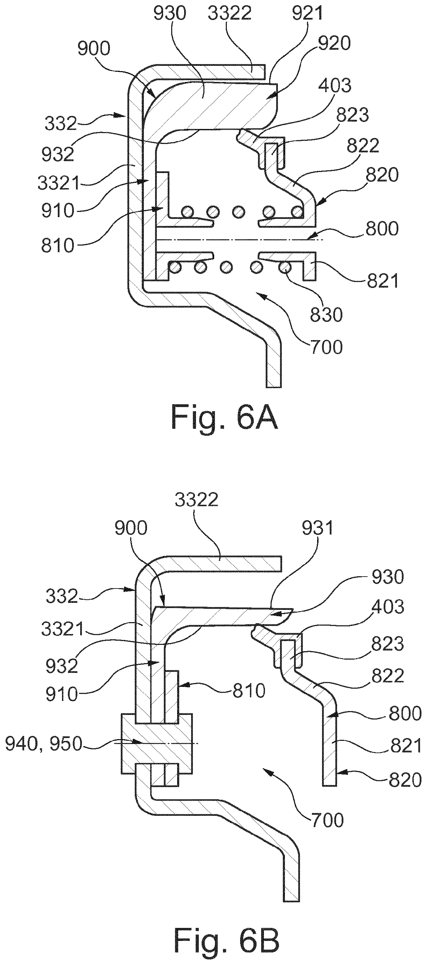

Comme visible sur les FIGURES 4 et 5, et plus particulièrement sur les FIGURES 6A et 6B, chaque système d'actionnement 300 comprend un réducteur de diamètre 900 logé dans la chambre d'équilibrage 700 afin de permettre de re-délimiter ladite chambre d'équilibrage, et plus particulièrement d'adapter le diamètre extérieur de la chambre d'équilibrage afin de le faire correspondre au diamètre extérieur de la chambre de commande 750.

De manière avantageuse, la portée annulaire 910 du réducteur de diamètre 900 associé à la chambre d'équilibrage 700A du premier système d'actionnement est inséré axialement entre la première pièce annulaire 810A du premier dispositif de rappel élastique 300A et la portée d'extension radiale intérieure 2065 du deuxième porte-disques d'entrée 206. Complémentairement, l'extrémité radiale extérieure 921 des nervures 920 situées sur la face extérieure 931 cylindrique de la portée cylindrique 930 du réducteur de diamètre 900 est en appui radial contre la portée d'extension axiale intermédiaire 2063 du deuxième porte-disques de sortie 206, afin de réaliser un centrage du réducteur de diamètre. Consécutivement, la face intérieure cylindrique 932 du réducteur de diamètre 900 est située sur un diamètre inférieur ou - préférentiellement - égal au diamètre d'une face intérieure de la portée d'extension radiale intermédiaire 1053 du premier piston 105 délimitant radialement vers l'extérieur la première chambre de commande 750A. Selon l'invention, le diamètre de la face intérieure cylindrique 932 du réducteur de diamètre 900 est supérieur à 98% et inférieur à 102% du diamètre de la face intérieure de la portée d'extension radiale intermédiaire 1053 du premier piston 105 délimitant radialement vers l'extérieur la première chambre de commande 750A.

Ainsi, conformément à l'invention prise selon son deuxième aspect, la chambre de commande 750A et la chambre d'équilibrage 700A du premier système de commande 300A ont un même diamètre extérieur, permettant ainsi de limiter les effets différentiels de centrifugation du fluide de lubrification remplissant la chambre d'équilibrage 700A et du fluide pressurisé remplissant la chambre de commande 750A.

De manière comparable, la portée annulaire 910B du réducteur de diamètre 900B associé à la chambre d'équilibrage 700B du deuxième système d'actionnement 300B est inséré axialement entre la première pièce annulaire 810B du deuxième dispositif de rappel élastique 300B et une portée d'extension radiale 3321 de la plaque de chemisage 332. Complémentairement, l'extrémité radiale extérieure 921B des nervures 920B situées sur la face extérieure 931B cylindrique de la portée cylindrique 930B du réducteur de diamètre 900B est en appui radial contre une portée d'extension axiale 3322 de la plaque de chemisage 332, afin de réaliser un centrage du réducteur de diamètre. Consécutivement, la face intérieure cylindrique 932 du réducteur de diamètre 900B est située sur un diamètre inférieur ou - préférentiellement - égal au diamètre d'une face intérieure de la portée d'extension radiale intermédiaire 2053 du deuxième piston 205 délimitant radialement vers l'extérieur la deuxième chambre de commande 750B. Selon l'invention, le diamètre de la face intérieure cylindrique 932 du réducteur de diamètre 900 est supérieur à 98% et inférieur à 102% du diamètre de la face intérieure de la portée d'extension radiale intermédiaire 2053 du deuxième piston 205 délimitant radialement vers l'extérieur la deuxième chambre de commande 750B.

Ainsi, conformément à l'invention prise selon son deuxième aspect, la chambre de commande 750B et la chambre d'équilibrage 700B du deuxième système de commande 300B ont un même diamètre extérieur, permettant ainsi de limiter les effets différentiels de centrifugation du fluide de lubrification remplissant la chambre d'équilibrage 700B et du fluide pressurisé remplissant la chambre de commande 750B.

Le troisième joint d'étanchéité 403 de chaque système d'actionnement 300 est en appui radial contre la face intérieure 932 cylindrique du réducteur de diamètre 900 correspondant, et plus particulièrement encore par l'intermédiaire d'une lèvre située à une extrémité dudit troisième joint d'étanchéité. Lorsque le piston correspondant 105, 205 est déplacé vers l'avant sous l'effet d'une commande du système d'actionnement 300 pour embrayer l'embrayage 100, 200 correspondant, le troisième joint d'étanchéité 403 glisse le long de la face intérieure 932 cylindrique du réducteur de diamètre 900 correspondant pour conserver l'étanchéité de la chambre d'équilibrage 700 et limiter, voire empêcher, les fuites du fluide de lubrification hors de la chambre d'équilibrage 700. À cet effet, l'état de surface de la face intérieure 932 cylindrique du réducteur de diamètre 900 est avantageusement particulièrement lisse, avec une rugosité adaptée. La rugosité est comprise entre les deux extrêmes suivantes : une limite maximale de rugosité permettant de ne pas user le troisième joint d'étanchéité 403 lorsque celui-ci glisse le long de la face intérieure 932 cylindrique du réducteur de diamètre 900 correspondant, et une limite minimale de rugosité permettant (i) de garantir un contact entre le troisième joint d'étanchéité 403 et le réducteur de diamètre 900 et (ii) d'empêcher l'apparition d'une fuite de fluide hydraulique du fait d'une rugosité trop faible. Les valeurs extrêmes de rugosité peuvent dépendre du matériau utilisé.

Comme visible particulièrement sur la FIGURE 6B, le réducteur de diamètre 900 comprend aussi des moyens de fixation 940, 950 dudit réducteur de diamètre 900 au dispositif de rappel élastique 800 et/ou à une face latérale de la chambre d'équilibrage 700. En particulier, le réducteur de diamètre 900 comprend des premiers moyens de fixation 940 agencés pour permettre l'assemblage du réducteur de diamètre 900 sur le dispositif de rappel élastique 800, préférentiellement du type d'un rivetage ou d'un encliquetage ou d'un collage ou d'une soudure ou d'un surmoulage. Le réducteur de diamètre 900 comprend aussi des seconds moyens de fixation 950 agencés pour permettre l'assemblage du réducteur de diamètre 900 sur la face latérale de la chambre d'équilibrage 700, préférentiellement du type d'un rivetage.

De manière avantageuse, et tel que représenté sur la FIGURE 6B, les premiers moyens de fixation 940 réducteur de diamètre 900 du sont communs avec les seconds moyens de fixation 950 dudit réducteur de diamètre 900. Ainsi, la première pièce annulaire 810 du dispositif de rappel élastique 800 et la portée annulaire 910 du réducteur de diamètre 900 et la face latérale de la chambre d'équilibrage 700 sont simultanément fixés les uns aux autres par l'intermédiaire d'un moyen de fixation 940, 950, qui prend ici la forme d'un rivet traversant ladite première pièce annulaire 810 et ladite portée annulaire 910 et ladite face latérale.

La face latérale de la chambre d'équilibrage 700 contre laquelle le réducteur de diamètre 900 est fixé solidairement est formée préférentiellement par :
- le deuxième porte-disques d'entrée 206 pour le réducteur de diamètre 900A associé au premier système d'actionnement 300A ;
- la portée d'extension radiale 3321 de la plaque de chemisage 332.

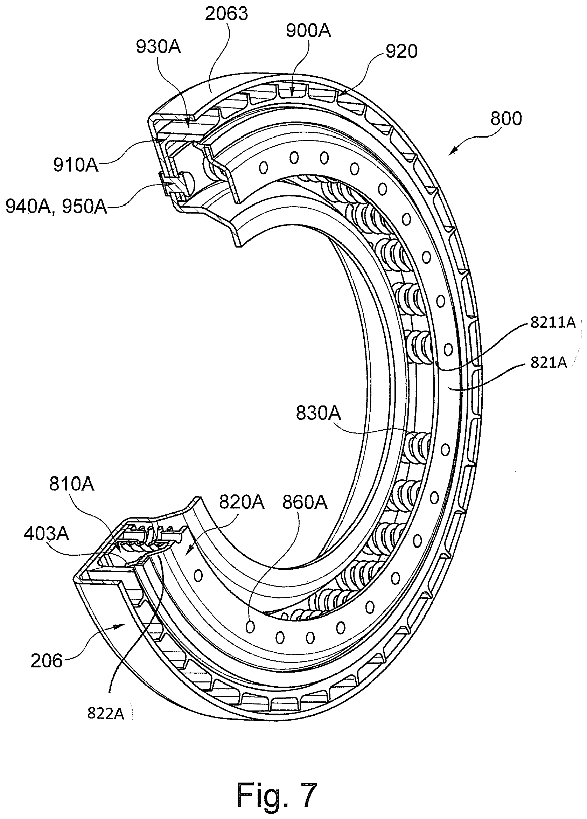

En référence à la FIGURE 7, un exemple de réalisation d'un dispositif de rappel élastique 800 conforme au premier aspect de l'invention est représenté.

Un tel dispositif de rappel élastique 800 est configuré pour pouvoir générer un effort à l'encontre d'un piston 105, 205 mis en mouvement par un système d'actionnement 300 d'un embrayage 100, 200 d'un mécanisme d'embrayage, tel que par exemple décrit précédemment. À cet effet, le dispositif de rappel élastique 800 comprend :
- une première pièce annulaire 810A destinée à prendre appui contre une face d'appui du mécanisme d'embrayage ;
- une seconde pièce annulaire 820A destinée à prendre appui contre le piston 105, 205 du mécanisme d'embrayage ;
- une pluralité d'éléments élastiques 830A s'étendant entre la première pièce annulaire 810A et la seconde pièce annulaire 820A. Dans l'exemple illustré sur la FIGURE 7, la pluralité d'éléments élastiques 830A est du type à ressorts hélicoïdaux, lesdits ressorts hélicoïdaux étant angulairement régulièrement répartis autour d'un axe de symétrie S du dispositif de rappel élastique 800.

La seconde pièce annulaire 820 du dispositif de rappel élastique 800 est d'axe de symétrie S. Dans l'exemple de réalisation illustré sur la FIGURE 7, la seconde pièce annulaire 820A est formée par un bord d'élongation radial 821A qui s'étend depuis l'extrémité radiale intérieure 8211A vers une portée intermédiaire 822A oblique. La portée intermédiaire 822A oblique est prolongée radialement vers l'extérieur par une portée d'extension radiale extérieure 823A qui porte au niveau de son extrémité extérieure 8231A un joint d'étanchéité 403A, dit troisième joint d'étanchéité 403A.

Dans l'exemple de réalisation illustré sur la FIGURE 7, l'extrémité radiale intérieure 8211A de la seconde pièce annulaire 820A du dispositif de rappel élastique 800 est située dans le prolongement radial du bord d'élongation radial 821A de ladite seconde pièce annulaire 820A.

La seconde pièce annulaire 820A comprend aussi une pluralité d'ouvertures 840A régulièrement angulairement réparties autour de l'axe de symétrie S. Les ouvertures 860A forment des trous débouchant au travers de la seconde pièce annulaire 820A. Les ouvertures 860A sont destinées à permettre une communication fluidique entre d'une part un premier côté de la seconde pièce annulaire 820A situé entre ladite seconde pièce annulaire 820A et la première pièce annulaire 810 et d'autre part un second côté de la seconde pièce annulaire 820A situé à l'opposé du premier côté par rapport à ladite seconde pièce annulaire 820A.

Le dispositif de rappel élastique 800 comprend avantageusement le réducteur de diamètre 900 conforme au premier aspect de l'invention et tel que décrit précédemment. La portée cylindrique 930 du réducteur de diamètre 900 est en contact radial contre une pièce d'appui du mécanisme d'embrayage, par exemple un deuxième porte-disques de sortie 206 tel que représenté sur la FIGURE 7. Plus particulièrement, les nervures 920A du réducteur de diamètre sont en appui radial contre une face intérieure de la portée d'extension axiale intermédiaire 2063 du deuxième porte-disques d'entrée 206, tel que décrit précédemment. La portée annulaire 910 du réducteur de diamètre 900 est avantageusement intercalée entre la première pièce annulaire 810A et la pièce d'appui du mécanisme d'embrayage. Plus particulièrement, la portée annulaire 910 du réducteur de diamètre 900 est en appui axial contre la première pièce annulaire 810A du dispositif de rappel élastique 800.

Une extrémité radiale supérieure du troisième joint d'étanchéité 403A est en appui contre le réducteur de diamètre 900. Plus particulièrement, le troisième joint d'étanchéité 403A comprend une lèvre qui est en appui radial contre la face intérieure 932 cylindrique de la portée cylindrique 930 du réducteur de diamètre 900.

De manière avantageuse, le dispositif de rappel élastique 800 comprend aussi des moyens de fixation 850A collaborant avec des moyens de fixation 940 complémentaires du réducteur de diamètre 900 permettant de fixer solidairement ledit réducteur de diamètre 900 sur la première pièce annulaire 810A du dispositif de rappel élastique 800. Dans l'exemple illustré sur la FIGURE 7, les moyens de fixation 850A sont du type d'au moins un rivet angulairement régulièrement réparti autour de l'axe de symétrie S. Préférentiellement, la pièce d'appui du mécanisme d'embrayage comprend une ouverture 2069 située en regard du moyen de fixation 850 du dispositif de rappel élastique 800.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Mécanisme d'embrayage (10) humide destiné à être installé entre un moteur et une transmission de véhicule automobile, lequel mécanisme d'embrayage (10) comprend :
- un embrayage (100, 200) en rotation autour d'un axe de rotation (O) ;
- un système d'actionnement (300) agencé pour embrayer ou débrayer l'embrayage (100, 200), ledit système d'actionnement (300) comprenant :
∘ une chambre de commande (750A, 750B) agencée pour recevoir un fluide pressurisé ;
∘ un piston (105, 205) mobile axialement qui est piloté au moyen de la chambre de commande (750A, 750B) à laquelle est associée une chambre d'équilibrage (700), ledit piston (105, 205) comprenant :
▪ une portée d'extension radiale (1055, 2055) qui s'étend radialement entre la chambre de commande (750A, 750B) et la chambre d'équilibrage (700) ;
▪ une portée d'extension axiale (1053, 2053) qui délimite un diamètre extérieur de la chambre de commande (750A, 750B) ;
∘ un dispositif de rappel élastique (800) logé dans la chambre d'équilibrage (700) et s'étendant entre le piston (105, 205) et une face latérale de la chambre d'équilibrage (700) ;
∘ un réducteur de diamètre (900) logé dans la chambre d'équilibrage (700) et dont une portée cylindrique (930) d'extension axiale délimite un diamètre extérieur de la chambre d'équilibrage (700) ;
**caractérisé en ce qu'**un ratio entre le diamètre extérieur de la chambre d'équilibrage (700) formé par le réducteur de diamètre (900) et le diamètre extérieur de la chambre de commande (750A, 750B) est supérieur à 98% et inférieur à 102%.

2. Mécanisme d'embrayage (10) selon la revendication précédente, dans lequel la portée cylindrique (930) d'extension axiale du réducteur de diamètre (900) forme un chemisage intérieur d'au moins une partie radiale supérieure de la chambre d'équilibrage (700).

3. Mécanisme d'embrayage (10) selon l'une quelconque des revendications 1 à 2, dans lequel un diamètre d'une face extérieure (931) de la portée cylindrique (930) du réducteur de diamètre (900) est égal à un diamètre extérieur de la chambre d'équilibrage (700).

4. Mécanisme d'embrayage (10) selon l'une quelconque des revendications 1 à 3, dans lequel le réducteur de diamètre (900) comprend des moyens de centrage (920) par rapport à la chambre d'équilibrage, situés sur une face extérieure (931) de la portée cylindrique (930).

5. Mécanisme d'embrayage (10) selon la revendication précédente, dans lequel les moyens de centrage (920) prennent la forme d'une pluralité de portées d'extension axiales s'étendant en saillie et radialement vers l'extérieur à partir de la face extérieure (931) de la portée cylindrique (930).

6. Mécanisme d'embrayage (10) selon l'une quelconque des revendications précédentes, dans lequel le réducteur de diamètre (900) comprend une portée annulaire (910) d'extension radiale formant un flasque (910), ledit flasque (910) s'étendant contre une paroi d'extension radiale de la chambre d'équilibrage (700).

7. Mécanisme d'embrayage (10) selon la revendication précédente, dans lequel le flasque (910) du réducteur de diamètre (900) est pressé contre la paroi d'extension radiale de la chambre d'équilibrage (700) par le dispositif de rappel élastique (800).

8. Mécanisme d'embrayage (10) selon la revendication précédente, dans lequel le réducteur de diamètre (900) comprend des premiers moyens de fixation (940) agencés pour permettre l'assemblage du réducteur de diamètre (900) sur le dispositif de rappel élastique (800).

9. Mécanisme d'embrayage (10) selon l'une quelconque des revendications 6 à 8, dans lequel le réducteur de diamètre (900) comprend des seconds moyens de fixation (950) agencés pour permettre l'assemblage du réducteur de diamètre (900) sur la paroi d'extension radiale de la chambre d'équilibrage (700).

10. Mécanisme d'embrayage (10) selon la revendication précédente prise en combinaison avec la revendication 8, dans lequel, les premiers moyens de fixation (940) sont communs avec les seconds moyens de fixation (950).

11. Mécanisme d'embrayage (10) selon l'une quelconque des revendications 6 à 10, dans lequel le flasque (910) est en appui contre un porte-disques d'entrée (106, 206) du mécanisme d'embrayage (10), le porte-disques d'entrée délimitant la chambre d'équilibrage (700).

12. Mécanisme d'embrayage (10) selon l'une quelconque des revendications précédentes, dans lequel le dispositif de rappel élastique (800) comprend :
- une première pièce annulaire (810) configurée pour prendre appui contre une face d'appui du mécanisme d'embrayage (10) ;
- une seconde pièce annulaire (820) configurée pour prendre appui contre le piston (105, 205) ;
- une pluralité d'éléments élastiques (830) s'étendant entre la première pièce annulaire (810) et la deuxième pièce annulaire (820).

13. Mécanisme d'embrayage (10) selon l'une quelconque des revendications 1 à 12, lequel mécanisme d'embrayage (10) est du type à double embrayages et comprenant un premier embrayage (100) piloté par un premier système d'actionnement (300A) et un deuxième embrayage (200) piloté par un deuxième système d'actionnement (300B), les premier (100) et deuxième (200) embrayages étant configurés dans une configuration radiale, le deuxième embrayage (200) étant situé radialement à l'intérieur du premier embrayage (100), le diamètre extérieur de la chambre d'équilibrage (700A) du premier système d'actionnement (300A) étant délimité par la portée cylindrique (930) d'un premier réducteur de diamètre (900), et le diamètre extérieur de la chambre d'équilibrage (700B) du deuxième système d'actionnement (300B) étant délimité par la portée cylindrique (930) d'un deuxième réducteur de diamètre (900), les diamètres extérieurs de chaque chambre d'équilibrage (700A, 700B) étant identiques.

14. Mécanisme d'embrayage (10) selon l'une quelconque des revendications 1 à 12, lequel mécanisme d'embrayage (10) est du type à double embrayages et comprenant un premier embrayage (100) piloté par un premier système d'actionnement (300A) et un deuxième embrayage (200) piloté par un deuxième système d'actionnement (300B), les premier (100) et deuxième (200) embrayages étant configurés dans une configuration axiale, le deuxième embrayage (200) étant juxtaposé axialement par rapport au premier embrayage (100), le diamètre extérieur de la chambre d'équilibrage (700A) du premier système d'actionnement (300A) étant délimité par la portée cylindrique (930) d'un premier réducteur de diamètre (900), et le diamètre extérieur de la chambre d'équilibrage (700B) du deuxième système d'actionnement (300B) étant délimité par la portée cylindrique (930) d'un deuxième réducteur de diamètre (900), les diamètres extérieurs de chaque chambre d'équilibrage (700A, 700B) étant identiques.

15. Dispositif de rappel élastique (800) destiné à être logé dans une chambre d'équilibrage (700) d'un système d'actionnement (300) d'un embrayage (100, 200) d'un mécanisme d'embrayage (10) afin de générer un effort à l'encontre d'un piston (105, 205) mis en mouvement par ledit système d'actionnement (300), ledit dispositif de rappel élastique (800) comprenant :
- une première pièce annulaire (810) destinée à prendre appui contre une face d'appui du mécanisme d'embrayage (10) ;
- une seconde pièce annulaire (820) destinée à prendre appui contre le piston (105, 205);
- une pluralité d'éléments élastiques (830) s'étendant entre la première pièce annulaire (810) et la deuxième pièce annulaire (820) ;
- un réducteur de diamètre (900) fixé contre une face opposée de la première pièce annulaire (810) par rapport à la pluralité d'éléments élastiques (830), ledit réducteur de diamètre (900) comprenant une portée cylindrique (930) d'extension axiale s'étendant radialement à l'extérieur de la première (810) et de la deuxième (820) pièce annulaire, ladite portée cylindrique (930) étant agencée pour pouvoir former un chemisage intérieur de la chambre d'équilibrage (700) du mécanisme d'embrayage (10) lorsque le dispositif de rappel élastique (800) est monté sur le mécanisme d'embrayage (10).
